(19) Europäisches Patentamt
European Patent Office
Office européen des brevets

(11) Veröffentlichungsnummer : **0 105 839**
**B1**

(12) # EUROPÄISCHE PATENTSCHRIFT

(45) Veröffentlichungstag der Patentschrift : **04.03.87**

(51) Int. Cl.⁴ : **E 04 C 5/08**

(21) Anmeldenummer : **83810431.3**

(22) Anmeldetag : **26.09.83**

(54) **Mit Kunststoff umhüllte Spannglieder, Verfahren zu ihrer Herstellung und ihre Verwendung.**

(30) Priorität : **01.10.82 CH 5808/82**
**10.02.83 CH 756/83**

(43) Veröffentlichungstag der Anmeldung : **18.04.84 Patentblatt 84/16**

(45) Bekanntmachung des Hinweises auf die Patenterteilung : **04.03.87 Patentblatt 87/10**

(84) Benannte Vertragsstaaten :
**AT BE CH DE FR GB IT LI NL SE**

(56) Entgegenhaltungen :
**DE-A- 2 919 020**
**DE-B- 2 018 941**

(73) Patentinhaber : **CIBA-GEIGY AG**
**Klybeckstrasse 141**
**CH-4002 Basel (CH)**

(72) Erfinder : **Dreher, Bernd**
**Spalentorweg 53**
**CH-4051 Basel (CH)**
Erfinder : **Schneider, Wolfgang**
**Liebrütistrasse 24.141**
**CH-4303 Kaiseraugst (CH)**

EP 0 105 839 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft mit zwei Kunststoffschichten umhüllte Spannglieder, insbesondere für Betontragewerke, wobei die innere Kunststoffschicht eine lagerstabile, verformbare und thermisch härtbare Zusammensetzung und die äussere Schicht eine feste strahlungsgehärtete Kunststoffschicht ist, ein Verfahren zu ihrer Herstellung und ihre Verwendung.

Aus der DE-B 2 018 941 sind Spannglieder von Betontragwerken mit einer zweischichtigen Umhüllung bekannt. Dabei besteht die äussere Schicht aus einem Kunststoff hoher Festigkeit, d. h. kalthärtenden Duroplasten hoher Festigkeit, wie Epoxid- oder Polyesterharze, oder einem nicht näher definierten Thermoplasten mit geeigneter Verbundfestigkeit. Die innere Schicht besteht aus einem pastenartig verformbaren, härtbaren Kunststoff. Als solche eignen sich sogenannte Schmelzkleber auf der Basis von Epoxidharz-Vorprodukten, Polyäthyleniminen oder ungesättigten Polyestern. Die innere Schicht kann auch Beschleuniger enthalten. Zwischen der äusseren und inneren Schicht kann ferner eine Zwischenschicht angeordnet sein. Gemäss einer abgeänderten Ausführungsform kann die Umhüllung auch nur aus heisshärtendem Kunststoff von der Art eines Schmelzklebers bestehen.

Die gesamte Kunststoffumhüllung erfüllt verschiedene Funktionen. So soll der tragende Kern des Spanngliedes wirksam vor Korrosion geschützt werden und die Kunststoffschichten müssen einen hochbelastbaren Verbund zum umgebenden Bindemittel aufweisen, wobei auch eine feste Verbindung der beiden Kunststoffschichten untereinander erforderlich ist. Die äussere Kunststoffschicht soll ferner eine Schutzschicht für die innere Kunststoffschicht sein.

Es hat sich als ungelöstes Problem erwiesen, die beiden Schichten ohne Vermischen und Bildung von Fehlstellen, die nach der Verarbeitung Ursache zur Korrosion und einer Verminderung der Haftfestigkeiten im Verbund sind, herzustellen. Zudem ist es äusserst wünschenswert, die äussere Kunststoffschicht bei der Herstellung möglichst schnell griffest zu machen und so die Handhabbarkeit und Lager- und Transportfähigkeit zu erleichtern und hierbei gleichzeitig einen wirksamen Schutz der inneren Schicht zu erzielen. Eine befriedigende Lösung für die Vermeidung der Mitreaktion der inneren Schicht beim Aufbringen und Härten der äusseren Schicht ist auch noch nicht aufgezeigt.

Aufgabe vorliegender Erfindung ist es, Spannglieder mit einer zweischichtigen Kunststoffumhüllung bereitzustellen, wobei die Umhüllung nach der Verarbeitung zu z. B. Betontragewerken einen wirksamen Korrosionsschutz darstellt und die beiden Schichten eine hohe Haftfestigkeit aufweisen, die innere Schicht der umhüllten Spannglieder mindestens für die Zeit bis zur Verarbeitung lagerstabil ist, die umhüllten Spannglieder schon kurz nach der Herstellung handhabbar und lagerfähig sind, die Aussenschicht ein wirksamer Schutz für die Innenschicht ist und bei der Herstellung ein Vermischen der Schichten und die Bildung von Fehlstellen zwischen den Schichten weitgehend vermieden wird. Ferner soll vermieden werden, dass die innere Schicht beim Härten der äusseren Schicht mitreagiert. Die äussere Schicht soll auch eine ausreichende Wärmeisolierung bei der Erwärmung und Härtung der inneren Schicht gewährleisten, um Schädigungen des umgebenden Bindemittels zu vermeiden.

Gegenstand vorliegender Erfindung ist ein Spannglied, auf das eine innere polymerbildende Schicht und eine äussere feste Kunststoffschicht aufgebracht ist, wobei die Schichten gegebenenfalls durch eine Zwischenschicht getrennt sind und die innere Schicht aus einer bei Raumtemperatur lagerstabilen, verformbaren und thermisch härtbaren Zusammensetzung besteht, dass dadurch gekennzeichnet ist, dass die äussere Schicht aus einem durch Strahlung gehärteten Kunststoff besteht.

Das Spannglied kann aus verschiedenem Material sein, die üblicherweise als Verstärkungsmaterialien für Bindemittel dienen, und es kann in unterschiedlichen Formen vorliegen. Geeignete Materialien sind z. B. Metalle, insbesondere Baustahle, sowie Kunststoffe, Glas, Kohlenstoffasern und Whisker. Das Material muss die Eigenschaft besitzen, sich bei Zugbeanspruchung in einem gewissen Ausmass zu dehnen. Mögliche Formen solcher Spannglieder sind z. B. Stäbe, Bänder, Drähte, Anker, Fasern, Litzen, Ein- und Mehrfachfilamente, Gewebe und Matten.

Die innere und äussere Kunststoffschicht können auch durch eine Zwischenschicht aus den verschiedensten Materialien, z. B. Glasfasern oder Metallfäden, getrennt sein. Ist das Material des Spanngliedes ein elektrischer Nichtleiter, so enthält die Trennschicht einen elektrischen Leiter wie z. B. ein Metall, etwa in Form eines gewickelten Drahtes, oder die Trennschicht ist selbst aus einem elektrischen Leiter, um einer induktive Heizung für die Aushärtung der Innenschicht zu gewährleisten. Für diesen Zweck kann auch der Kern des Spanngliedes im Falle von Nichtleitern mit einem elektrischen Leiter vor der Beschichtung umwickelt werden.

Die innere Schicht ist bei Raumtemperatur lagerstabil. Hierunter wird verstanden, dass die Zusammensetzung mindestens bis zur Verarbeitung nur unwesentlich reagieren darf, um eine vorzeitige Aushärtung zu vermeiden. Die innere Schicht ist ferner verformbar, so dass beim Spannen ein reibungsloses Gleiten ohne Beschädigungen in der Innenschicht, wie z. B. die Bildung von Rissen, möglich ist. Die innere Schicht kann niederviskos bis fest sein und sie kann zur Verhinderung eines Ablaufens bzw. -tropfens thixotropiert sein. Sofern die innere Schicht fest ist, wird ihre Verformbarkeit durch Erwärmen und Schmelzen erzielt, wobei gegebenenfalls die Härtungsreaktion bereits einsetzen kann.

Die innere Schicht ist thermisch härtbar. Um ein schwundfreies Aushärten zu erzielen, werden

bevorzugt solche Ausgangsstoffe eingesetzt, die durch Polyaddition oder Polymerisation zu Duroplasten härtbar sind.

Geeignete Ausgangsstoffe sind z. B. ungesättigte Polyester, besonders solche auf der Basis von Maleinsäure, die alleine oder in Abmischung mit olefinisch ungesättigten Verbindungen als reaktive Verdünner verwendet werden können. Diese Ausgangsstoffe sind dem Fachmann bekannt. Weitere geeignete Ausgangsstoffe sind Polyester auf der Basis von Acrylsäure und/oder Methacrylsäure und Polyolen sowie besonders Umsetzungsprodukte von Epoxidharzen mit diesen Säuren, die auch mit den erwähnten reaktiven Verdünnern eingesetzt werden können.

Eine weitere Gruppe geeigneter Ausgangsstoffe sind verkappte Polyurethane, besonders mit Phenolen verkappte Polyurethane. Auch diese Stoffe sind dem Fachmann geläufig.

Eine bevorzugte Gruppe sind auf Grund der erzielbaren Haftfestigkeiten Polyepoxidverbindungen. Als solche kommen z. B. vor allem solche mit durchschnittlich mehr als einer an ein Heteroatom (z. B. Schwefel, vorzugsweise Sauerstoff oder Stickstoff) gebundenen Glycidylgruppe, β-Methylglycidylgruppe oder 2,3-Epoxycyclopentylgruppe in Frage; genannt seien insbesondere Bis-(2,3-epoxycyclopentyl)äther; Di- bzw. Polyglycidyläther von mehrwertigen aliphatischen Alkoholen, wie 1,4-Butandiol, oder Polyalkylenglykolen, wie Polypropylenglykole; Di- oder Polyglycidyläther von cycloaliphatischen Polyolen, wie 2,2-Bis-(4-hydroxycyclohexyl)-propan; Di- bzw. Polyglycidyläther von mehrwertigen Phenolen, wie Resorcin, Bis-(p-hydroxyphenyl)-methan, 2,2-Bis-(p-hydroxyphenyl)-propan (=Diomethan), 2,2-Bis-(4'-hydroxy-3',5'-dibromphenyl)propan, 1,1,2,2-Tetrakis-(p-hydroxyphenyl)-äthan, oder von unter sauren Bedingungen erhaltenen Kondensationsprodukten von Phenolen mit Formaldehyd, wie Phenol-Novolake und Kresol-Novolake; Di- bzw. Poly-(β-methylglycidyl)-äther der oben angeführten mehrwertigen Alkohole oder mehrwertigen Phenole; Polyglycidylester von mehrwertigen Carbonsäuren, wie Phthalsäure, Terephthalsäure, $\Delta^4$-Tetrahydrophthalsäure und Hexahydrophthalsäure; N-Glycidylderivate von Aminen, Amiden und heterocyclischen Stickstoffbasen, wie N,N-Diglydicylanilin, N,N-Diglycidyltoluidin, N,N,N',N'-Tetraglycidyl-bis-(p-aminophenyl)-methan; Triglycidyl-isocyanurat; N,N'-Diglycidyläthylenharnstoff; N,N'-Diglycidyl-5,5-dimethylhydantoin, N,N'-Diglycidyl-5-isopropyl-hydantoin; N,N'-Diglycidyl-5,5-dimethyl-6-isopropyl-5,6-dihydro-uracil.

Die Polyepoxidverbindungen können mit üblichen Härtern wie Polyaminen, Polyolen und Polycarbonsäuren vor der Applikation zu gegebenenfalls festen, noch schmelzbaren Produkten vorreagiert werden (B-Stufen).

Gewünschtenfalls kann man den Polyepoxiden zur Herabsetzung der Viskosität aktive Verdünner, wie z. B. Styroloxid, Butylglycidyläther, Isooctylglycidyläther, Phenylglycidyläther, Kresylglycidyläther, oder Glycidylester von synthetischen, hochverzweigten, in der Hauptsache tertiären aliphatischen Monocarbonsäuren (« CARDURA E ») zusetzen. Solche Verdünner werden vor allem bei festen Epoxidharzen verwendet.

Unter den Polyepoxidverbindungen sind die Glycidyläther aromatischer Polyphenole, wie z. B. der Bisphenole, bevorzugt. Sie weisen besonders einen Epoxidgehalt von 3 bis 8, insbesondere 4 bis 6 Val/kg und Viskositäten von etwa 1 000 bis 20 000, besonders 1 000 bis 12 000 mPa s auf. Besonders bevorzugt sind die Glycidyläther von Bisphenol-A, Bisphenol-F sowie epoxidierte Novolake.

Die thermisch härtbare innere Schicht enthält zusätzlich einen Härter, wenn bei Zufuhr von Wärme die Härtungsreaktion nicht von selbst einsetzt. Gegebenenfalls kann auch ein Härtungsbeschleuniger zugesetzt werden. Zur Gewährleistung der Lagerstabilität werden dann latente Härter zugesetzt. Hierbei handelt es sich um solche, die wärmeaktivierbar sind.

Diese Wärmeaktivierung kann auf Grund physikalischer oder chemischer Mechanismen erfolgen. So kann man Härter verwenden, die bei Raumtemperatur im härtbaren Ausgangsstoff unlöslich sind, sich aber bei Erwärmen und Schmelzen der härtbaren Schicht lösen, worauf die Härtung einsetzt. Ferner kann man im Ausgangsstoff gelöste Härter einsetzen, die bei Erwärmung in reaktive Verbindungen umgewandelt werden, wie z. B. Radikalbildner für ungesättigte Polyester oder organische Verbindungen, die H-acide Verbindungen wie Bisphenole, Polyole oder Polymerkaptane abspalten, für Polyurethane oder Säuren oder Basen abspaltende organische Verbindungen für die Polyepoxidverbindungen. Eine weitere Möglichkeit ist die Verwendung von bei Raumtemperatur nur sehr langsam, bei Erwärmung aber schnell reagierenden Härtersystemen.

Für Polyepoxidverbindungen besonders geeignete latente Härter sind solche, die bei Raumtemperatur im verwendeten Polyepoxid unlöslich sind. Beispiele hierfür sind: Salze von aromatischen Carbonsäuren wie Benzoesäure, Phenylessigsäure, Naphthalincarbonsäure und von aliphatischen, cycloaliphatischen und araliphatischen Polyaminen wie z. B. Aethylen- oder Propylendiamin, Diäthylentriamin, 1,4-Diaminocyclohexan oder Xylylendiamin. Es kann sich um primäre und sekundäre, besonders aber tertiäre Polyamine handeln und bevorzugt um solche tertiäre Polyamine, die Dimethylaminogruppen enthalten. Eine weitere Gruppe geeigneter Härter sind feste, ein- oder mehrkernige Phenole wie Bisphenole und Novolake, ein- und mehrkernige aromatische Polyamine, Polycarbonsäureanhydride und Polycarbonsäuren. Ebenfalls als Härter geeignet sind feste B-Stufenharze aus Polyepoxidverbindungen und Polyaminen oder Polycarbonsäureanhydriden. Ferner ist Dicyandiamid zusammen mit Härtungsbeschleunigern geeignet. Die Härter können gleichzeitig mit Beschleunigern wie Harnstoffderivaten, Imidazolen oder Zinnsalzen eingesetzt werden.

Die innere Schicht kann auch aus einem festen B-Stufen-Epoxidharz bestehen, das z. B. durch

Vorreaktion einer Schicht von Polyepoxiden und Härtern, wie Polyphenolen, aromatischen Polyaminen und Polycarbonsäureanhydriden, direkt auf dem Spannglied erzeugt werden kann.

Diese B-Stufenharze können beim Spannen des Spanngliedes durch induktives Erwärmen geschmolzen werden, damit die Gleitwirkung gewährleistet ist, und danach vollständig ausgehärtet werden. Die Vorreaktion ist zur Erhöhung der Lagerstabilität dann zu empfehlen, wenn die Epoxidharz/Härtersysteme in flüssiger Form keine ausreichende Lagerstabilität aufweisen.

Als strahlungshärtbare Ausgangsstoffe für die äussere Schicht kommen solche von äthylenisch ungesättigten monomeren, oligomeren und polymeren Verbindungen in Frage, die durch Photopolymerisation oder Photodimerisation zu höhermolekularen, festen Produkten reagieren.

Besonders geeignet hierfür sind z. B. Ester und Amide von äthylenisch ungesättigten Carbonsäuren und von Polyolen oder Polyepoxiden, und Polymere mit äthylenisch ungesättigten Gruppen in der Kette oder in Seitengruppen wie z. B. ungesättigte Polyester, Polyamide und Polyurethane und Copolymere hiervon, Polybutadien und Polybutadien-Copolymere, Polyisopren und Polyisopren-Copolymere, Polymere und Copolymere mit Maleinimidylgruppen oder Acryl- bzw. Methacrylgruppen in Seitenketten, ungesättigte Epoxidharze sowie Mischungen von ein oder mehreren solcher Polymerer.

Beispiele für äthylenisch ungesättigte Carbonsäuren sind Acrylsäure, Methacrylsäure, Crotonsäure, Itaconsäure, Zimtsäure, ungesättigte Fettsäuren wie Linolensäure oder Oelsäure. Bevorzugt sind Acryl- und Methacrylsäure.

Als Polyole sind für die Ester aromatische und besonders aliphatische und cycloaliphatische Polyole geeignet. Beispiele für aromatische Polyole sind Hydrochinon, 4,4'-Dihydroxyphenylen, Bisphenole wie Bisphenol-A oder -F sowie Novolake und Resole. Geeignete Polyepoxide für die Ester z. B. solche auf der Basis der zuvor genannten Polyole, besonders der aromatischen Polyole und Epichlorhydrin. Ferner sind auch Polymere oder Copolymere mit Hydroxylgruppen an der Polymerkette oder in Seitengruppen, wie z. B. Polyvinylalkohol und Copolymere davon oder Polymethacrylsäurehydroxyalkylester wie z. B. β-Hydroxyäthylester oder Copolymere davon, als aliphatische Polyole geeignet. Weitere geeignete aliphatische Polyole sind Oligoester mit Hydroxylendgruppen.

Eine bevorzugte Gruppe von aliphatischen oder cycloaliphatischen Polyolen sind solche der Formel $R_n(OH)_n$, worin R ein n-wertiger, vorzugsweise 2- bis 8-, besonders 2- bis 6-wertiger aliphatischer Rest mit 2 bis 30 C-Atomen, der such Stickstoff-, Schwefel- und besonders Sauerstoffatome sowie Cycloalkylen unterbrochen sein kann, oder Cycloalkylen mit 5 oder 6 Ringkohlenstoffatomen ist. Beispiele für solche Polyole sind Alkylendiole mit bevorzugt 2 bis 12 C-Atomen, wie Aethylenglykol, 1,2- oder 1,3-Propandiol, 1,2-, 1,3- oder 1,4-Butandiol, Pentandiol, Hexandiol, Octandiol, Dodecandiol, Diäthylenglykol, Triäthylenglykol, Polyäthylenglykole mit Molekulargewichten von bevorzugt 100 bis 1 500, 1,3-Cyclopentandiol, 1,2-, 1,3- oder 1,4-Cyclohexandiol, 1,4-Dihydroxymethylcyclohexan, Glycerin, Tris-(β-hydroxyäthyl)amin, Trimethyloläthan, Trimethylolpropan, Pentaerythrit, Dipentaerythrit und Sorbit.

Die Polyole können teilweise oder vollständig mit einer oder verschiedenen äthylenisch ungesättigten Carbonsäuren verestert sein, wobei in Teilestern die freien Hydroxylgruppen modifiziert, z. B. veräthert, oder mit anderen Carbonsäuren verestert sein können. Beispiele für solche Ester sind :

Trimethylolpropantriacrylat, Trimethyloläthantriacrylat, Trimethylolpropantrimethacrylat, Trimethyloläthantrimethacrylat, Tetramethylenglykoldimethacrylat, Triäthylenglykoldimethacrylat, Tetraäthylenglykoldiacrylat, Pentaerythritdiacrylat, Penterythrittriacrylat, Pentaerythrittetracrylat, Dipentaerythritdiacrylat, Dipentaerythrittriacrylat, Dipentaerythrittetraacrylat, Dipentaerythritpentaacrylat, Dipentaerythrithexaacrylat, Tripentaerythritoctaacrylat, Pentaerythritdimethacrylat, Pentaerythrittrimethacrylat, Dipentaerythritdimethacrylat, Dipentaerythrittetramethacrylat, Tripentaerythritoctamethacrylat, Pentaerythritdiitaconat, Dipentaerythrittrisitaconat, Dipentaerythritpentaitaconat, Dipentaerythrithexaitaconat, Aethylenglykoldimethacrylat, 1,3-Butandioldiacrylat, 1,3-Butandioldimethacrylat, 1,4-Butandioldiitaconat, Sorbittriacrylat, Sorbithexaacrylat, Sorbittetramethacrylat, Sorbitpentaacrylat, Sorbithexaacrylat, Oliogoesteracrylate, Oligoestermethacrylate, Glyzerindi- und -triacrylat, 1,4-Cyclohexandiacrylat, Bis-acrylate und Bismethacrylate von Polyäthylenglykol mit einem Molekulargewicht von 100-1 500, oder Gemische davon.

Geeignet sind auch die Amide gleicher oder verschiedener ungesättigter Carbonsäuren von aromatischen, cycloaliphatischen und aliphatischen Polyaminen mit bevorzugt 2 bis 6, insbesondere 2 bis 4 Aminogruppen, und 2 bis 30, besonders 2 bis 18 C-Atomen. Beispiele für Amine sind Alkylendiamine mit bevorzugt 2 bis 22 C-Atomen wie Aethylendiamin, 1,2- oder 1,3-Propylendiamin, 1,2-, 1,3- oder 1,4-Butylendiamin, 1,5-Pentylendiamin, 1,6-Hexylendiamin, Octylendiamin, Dodecylendiamin, 1,4-Diaminocyclohexan, Isophorondiamin, Phenylendiamin, Bisphenylendiamin, Di-β-aminoäthyläther, Diäthylentriamin, Triäthylentetramin, Di-(β-aminoäthoxy)- oder Di(β-aminopropoxy)äthan. Beispiele für solche Amide sind : Methylen-bis-acrylamid, 1,6-Hexamethylen-bis-acrylamid, Diäthylentriamin-tris-methacrylamid, Bis(methacrylamidopropoxy)äthan, β-Methacryl-amido-äthylmethacrylat, N[(β-hydroxyäthyloxy)äthyl]-acrylamid. Weitere geeignete Polyamine sind Polymere und Copolymere mit Aminogruppen in der Seitenkette und Oligoamide mit Aminoendgruppen.

Geeignete ungesättigte Polyester und Polyamide als strahlungshärtbare Ausgangsstoffe leiten sich z. B. von Maleinsäure und Diolen oder Diaminen ab. Die Maleinsäure kann teilweise durch andere Dicarbonsäuren ersetzt sein. Sie können zusammen mit äthylenisch ungesättigten Comonomeren, z. B. Styrol, eingesetzt werden. Die Polyester und Polyamide können sich auch von Dicarbonsäuren und

äthylenisch ungesättigten Diolen oder Diaminen ableiten, besonders längerkettigen mit z. B. 6 bis 20 C-Atomen. Beispiele für Polyurethane sind solche, die aus gesättigten oder ungesättigten Diisocyanaten und ungesättigten bzw. gesättigten Diolen aufgebaut sind.

Strahlungshärtbare Polybutadiene und Polyisoprene und Copolymere davon sind bekannt. Geeignete Comonomere für solche Copolymeren sind z. B. Polyolefine wie Aethylen, Propen, Buten, Hexen, Acrylate und Methacrylate, Acrylnitril, Styrol oder Vinylchlorid. Strahlungshärtbare Polymere mit Maleinimidylgruppen in der Seitenkette sind z. B. in der DE-A 26 26 795 beschrieben. Strahlungshärtbare Polymere mit Acrylat und/oder Methacrylatgruppen in der Seitenkette sind ebenfalls bekannt. Es kann sich z. B. um Umsetzungsprodukte von Epoxidharzen auf Novolakbasis mit Acryl- und/oder Methacrylsäure handeln, um Homo- oder Copolymere des Polyvinylalkohols oder deren Hydroxyalkylderivate, die mit Acryl- und/oder Methacrylsäure verestert sind, oder um Homo- und Copolymere von Acrylaten bzw. Methacrylaten mit Oxoalkylacrylat- bzw. -methacrylatgruppen. Bei den strahlungshärtbaren ungesättigten Epoxidharzen handelt es sich hauptsächlich um solche, die eine

$$-HC-CH-\overset{\overset{O}{\|}}{C}-$$

oder

$$-HC=CH-\overset{\overset{O}{\|}}{C}-CH=CH-$$

Gruppe enthalten. Solche Epoxidharze sind z. B. in der DE-A 23 42 407 beschrieben.

Die strahlungshärtbaren Ausgangsstoffe können alleine oder in beliebigen Mischungen eingesetzt werden. Vorteilhaft ist das Zumischen von Estern ungesättigter Carbonsäuren, besonders der Acrylate bzw. Methacrylate von Polyolen, und/oder weiteren Vinylverbindungen wie z. B. Vinylpyridin oder Vinylpyrrolidon.

Weitere geeignete strahlungshärtbare Ausgangsstoffe sind z. B. auch Epoxidharze mit strahlungsaktivierbaren latenten Härtern, besonders Epoxidharze auf Basis aromatischer Polyole. Beispiele für solche latente Härter sind α- und β-Acylsulfonyloxyverbindungen, Diazoniumsalze, Oniumsalze der Elemente der Gruppen Va, VIa oder VIIa des Periodensystems, z. B. die Chloride, Bromide, Jodide und besonders die Salze von Komplexsäuren wie z. B. Hexfluorophosphat und Hexafluoroarsenat ; N-Sulfonyloxyimide ; Ester von Sulfonsäuren mit α-Methylolbenzoinen und o-Hydroxyacylphenonen ; o-Nitrobenzaldehyde und α-Chlor- oder α-Bromacylphenone. Unter den Oniumsalzen sind die Sulfoniumsalze wie z. B. Triphenylsulfoniumhexyfluorophosphat bevorzugt. Geeignete latente Härter sind auch Metallocensalze, wie z. B. ($\eta^6$-Methylnaphthalin)-($\eta^5$-cyclopentadienyl)eisen-II-hexafluorophosphat. Geeignete strahlungshärtbare Ausgangsstoffe sind auch Oligomere und Polymere, die aromatische Diazide als Vernetzungsmittel enthalten.

Die äussere Schicht enthält bevorzugt ein strahlungsgehärtetes Epoxidacrylat oder Epoxidmethacrylat, Epoxidharz, Polyesteracrylat oder -methacrylat auf Bisphenolbasis, (ungesättigtes Polyurethan oder Polyester) oder ein Polymer mit seitenständigen Maleinimidgruppen, besonders Dimethylmaleinimidgruppen.

Besonders bevorzugt enthält die äussere Schicht ein strahlungsgehärtetes mit mindestens einem Acrylester oder Methacrylester eines aliphatischen Polyols abgemisches Epoxidacrylat oder Epoxidmethacrylat.

Der äusseren Schicht können auch Bindemittel zugesetzt werden, was besonders zweckmässig ist, wenn es sich bei den strahlungshärtbaren Ausgangsstoffen um flüssige oder viskose Substanzen handelt.

Geeignete Bindemittel sind z. B. Polymere mit einem Molekulargewicht von etwa 5 000 bis 2 000 000, bevorzugt 10 000 bis 1 000 000. Beispiele sind : Homo- und copolymere Acrylate und Methacrylate, z. B. Copolymere aus Methylenmethacrylat/Aethylacrylat/Methacrylsäure, Poly(methacrylsäurealkylester), Poly(acrylsäurealkylester), wobei Alkyl = $C_1$-$C_{20}$ ist, Celluloseester und -äther wie Celluloseacetat, Celluloseacetatbutyrat, Methylcellulose, Aethylcellulose, Polyvinylbutyral, Polyvinylformal, cyclisierter Kautschuk, Polyäther wie Polyäthylenoxid, Polypropylenoxid, Polytetrahydrofuran ; Polystyrol, Polycarbonat, Polyurethan, chlorierte Polyolefine, Polyvinylchlorid, Copolymere aus Vinylchlorid/Vinylidenchlorid, Copolymere aus Vinylidenchlorid mit Acrylonitril, Methylmethacrylat und Vinylacetat, Polyvinylacetat, Copoly(äthylen/vinylacetat), Polyamide wie Poly(hexamethylenadipamid) und Polycaprolactam, Polyester wie Poly(äthylenglykolterephthalat) und Poly(hexamethylenglykolsuccinat).

Die strahlungshärtbaren Ausgangsstoffe werden zweckmässig so ausgewählt, dass die äussere Schicht hydrolysestabil und nicht schrumpfend ist. Zur Erhöhung der Lichtempflindlichkeit können Initiatoren und Sensibilisatoren zugesetzt werden, wie aromatische Ketone, z. B. Tetramethyldiaminobenzophenon, Benzophenon, Michler's Keton (4',4-Bis(dimethylamino)benzophenon), 4,4'-Bis(diäthylamino)benzophenon, 4-Acryloxy-4'-diäthylaminobenzophenon, 4-Methoxy-4'-dimethylaminobenzophenon, 2-Aethylanthrachinon, Phenantrachinon, 2,6-Butylanthrachinon, 1,2-Benzanthrachinon, 2,3-Benzanthrachinon, 2,3-Dichlornaphthochinon, Benzyldimethylketal und aromatische Ketone gemäss US-Patent 3.552.973 ; Benzoin, Benzoinäther, wie Benzoinmethyläther, Benzoinäthyläther, Benzoinisobutyläther und Benzoinphenyläther, Methylbenzoin, Aethylbenzoin und andere Benzoine, p-Maleinimidobenzolsulfonsäureazid, Thioxanthonderivate, wie Thioxanthon, 2-Chlorthioxanthon, 2-Isopropylthioxanthon, Thioxanthon-1-carbonsäureäthylester, 3-Methoxythioxanthon-1-carbonsäureäthylester in Verbindung mit aromatischen Aminen, wie p-Dimethylaminobenzoesäureäthylester und 4,4'-Bis(dimethylamino)benzophenon.

Die Härtung der strahlungsempfindlichen Ausgangsstoffe kann durch γ-Strahlung, Röntgenstrahlung, Elektronenstrahlung, Laserlicht und insbesondere UV-Strahlung vorgenommen werden.

Besonders vorteilhaft ist es, wenn die äussere Schicht zusätzlich thermisch härtbar ist, besonders über die gleichen funktionellen Gruppen wie die härtbare Zusammensetzung der inneren Schicht, beispielsweise Epoxidgruppen. In einer weiteren Ausführungsform enthält die äussere Schicht funktionelle Gruppen, die bei der thermischen Härtung der inneren Schicht mitreagieren. Hiermit wird eine besonders gute Haftfestigkeit der Schichten nach der Härtung erzielt. Mögliche funktionelle Gruppen sind z. B. olefinisch ungesättigte Gruppen, wie Allyl oder Methallyl, OH, SH, —COOH, Aminogruppen und Urethangruppen.

Die Dicke der inneren Schicht kann im allgemeinen 50-300, besonders 100-300 μm betragen. Die Dicke der äusseren Schicht beträgt ca. 50 μm bis ca. 1 mm, vorzugsweise 100 μm bis 800 μm und insbesondere 250 bis 500 μm. Wenn die äussere Schicht Füllstoffe enthält, kann die Dicke ca. 400 μm bis ca. 4 mm, vorzugsweise 600 μm bis 2 mm betragen. Für eine bessere Haftung des umhüllten Spanngliedes mit dem umgebenden Bindemittel kann dieses in üblicher Weise aufgerauht sein.

Die innere und die äussere Schicht können übliche Zusätze wie Thixotropiemittel, Haftvermittler, Gleitmittel und feinteilige Füllstoffe aller Art und andere Verarbeitungshilfsmittel und die Endeigenschaften verbessernde Zusatzstoffe enthalten. Die äussere Schicht kann durch einen Gehalt an Füllstoff aufgerauht bzw. strukturiert sein, um einen besseren Verbund mit dem Bindemittel zu erzielen. Zur Wärmeisolation können der äusseren Schicht z. B. Glasperlen zugegeben werden.

Die Herstellung der erfindungsgemässen Spannglieder erfolgt nach an sich bekannter Weise, indem man zunächst auf den Kern des Spannelementes die innere Schicht mittels üblicher Auftrageverfahren wie Tauchen, Giessen, Streichen oder Sprühen aufbringt und diese Schicht gegebenenfalls mit einem Trennmaterial umhüllt. Bewährt hat sich das Aufsprühen mit Ringdüsen. Die Umhüllung ist dann unnötig, wenn eine feste aber noch verformbare innere Schicht, z. B. mit B-Stufenharzen aufgebracht wird. Die Zusammensetzung der inneren Schicht kann in einem Lösungsmittel gelöst auf die Oberfläche aufgebracht werden, worauf das Lösemittel entfernt wird. Wirtschaftlich vorteilhafter ist jedoch die direkte Beschichtung, die durch die Auswahl von Zusammensetzungen mit niedriger Viskosität möglich ist. Auf die innere Schicht bzw. die Trennschicht wird dann die äussere Schicht aufgetragen und vorteilhaft kurz nach dem Auftragen durch Strahlung, zweckmässig mit UV-Lampen wie Quecksilberdampflampen, ausgehärtet.

Ein weiterer Gegenstand vorliegender Erfindung ist somit ein Verfahren zur Herstellung einer zweischichtigen Kunststoffumhüllung für Spannglieder, wobei die zwei Kunststoffschichten gegebenenfalls durch eine Zwischenschicht getrennt ist, indem man auf das Spannglied eine innere Schicht aus einer Raumtemperatur lagerstabilen, verformbaren und thermisch härtbaren Zusammensetzung aufbringt und diese gegebenenfalls mit einem Trennmaterial umhüllt, dadurch gekennzeichnet, dass man eine äussere Schicht aus einer durch Strahlung härtbaren Zusammensetzung aufbringt und danach die äussere Schicht durch Strahlung aushärtet.

So sind auf einfache Weise, ohne lange Reaktionszeiten und weiteren Aufwand, wie umständliche Haltevorrichtungen, für eine längere Härtungszeit, Spannelemente mit einer zweischichtigen Kunststoffumhüllung herstellbar, die sofort lager- und transportfähig sind, eine noch reaktive Schicht enthalten, die ausreichend lagerstabil ist bis zur Verarbeitung und bei der die beiden Kunststoffschichten nicht durchmischt sind, was die Ursache von Fehlstellen sein kann, sondern voneinander getrennt vorliegen.

Die erfindungsgemässen Spannelemente eignen sich hervorragend zur Herstellung von vorgespannten tragenden Konstruktionen. Ein weiterer Gegenstand der Erfindung ist diese Verwendung. Hierbei werden die Spannelemente zunächst vorgespannt, mit einem Bindemittel umhüllt, z. B. thermoplastischen oder duroplastischen Kunststoffen oder Bauwerkstoffen wie Beton, darauf wird die Innenschicht erwärmt und gehärtet. Die Erwärmung erfolgt durch einen Induktionsstrom, der durch Anlegen an den Kern des Spanngliedes oder eine elektrisch leitende Zwischenschicht bei Nichtleitern erzielt wird. Man erhält einen festen Verbund, der hohen Belastungen standhält und in dem ein wirksamer Korrosionsschutz für den Kern des Spannelementes erzielt wird.

Ein besonderes Anwendungsgebiet für die erfindungsgemässen Spannelemente sind die Herstellung von Betontragewerken wie Türme, Brücken, Decken, Wände von Grossbehältern sowie Felsverankerungen.

Die nachfolgenden Beispiele erläutern die Erfindung näher.

### Beispiel 1

Auf einen Baustahl wird durch Sprühen folgende innere Schicht aufgetragen: Mischung aus

100 Gew.-Teilen Epoxidharz auf Bisphenol-A-Basis mit Epoxidgehalt von 5,2-5,5 Val/kg und einer Viskosität von 9 000-12 000 mPa s bei 25 °C.
13 Gew.-Teilen Härter aus 8 Gew.-Teilen Dicyandiamid,
4 Gew.-Teilen 3-(p-Aethoxyphenyl)-1,1-dimethylharnstoff,
0,3 Gew.-Teilen Kieselsäure (Aerosil) und
0,7 Gew.-Teilen Dibutylphthalat.

Die Schichtdicke beträgt 200 bis 300 µm. Die Schicht wird mit einer Binde umwickelt und hierauf folgende äussere lichthärtbare Schicht (ca. 350 µm dick) aufgebracht:

60 Gew.-Teile Epoxidacrylat (Umsetzungsprodukt aus Acrylsäure und Bisphenol-A-diglycidyläther; 70 %-ige Lösung in Tri-propylenglykoldiacrylat; Viskosität der Lösung: 17 000 mPa s bei 25 °C).
22 Gew.-Teile Tripropylenglykoldiacrylat
12 Gew.-Teile Trimethylolpropantriacrylat
4 Gew.-Teile Benzildimethylketal
2 Gew.-Teile Triäthanolamin
20 Gew.-Teile Talkum
6 Gew.-Teile Kieselsäure (Aerosil 200)

Die Schicht wird mit einer Quecksilberdampfdrucklampe (80 Watt/cm) UV-bestrahlt und hierbei während 4-6 Sekunden ausgehärtet. Die Schichten zeichnen sich durch gute Haftfestigkeit aus. Die innere Schicht ist bei Raumtemperatur (RT) während ca. 3 Wochen lagerstabil und kann bei induktiver Erwärmung auf 150 °C während 10 bis 15 Minuten ausgehärtet werden.

## Beispiel 2

Es wird wie in Beispiel 1 verfahren, aber folgende innere Schicht aufgebracht:

85 Gew.-Teile Epoxidharz gemäss Beispiel 1
15 Gew.-Teile Dibutylphthalat
42 Gew.-Teile m-Xylylendiamindibenzoat

Die innere Schicht ist leicht thixotrop und bei RT bis ca. 3 Monate lagerstabil. Die induktive Erwärmung auf 120 °C führt während 5 bis 7 Minuten zur Aushärtung.

## Beispiel 3

Es wird wie in Beispiel 1 verfahren, aber folgende innere Schicht aufgebracht:

92 Gew.-Teile Epoxidharz gemäss Beispiel 1
8 Gew.-Teile Dibutylphthalat
37 Gew.-Teile Aethylendiamindibenzoat

Die innere Schicht ist thixotrop und bei RT während 3 Monaten lagerstabil. Bei induktiver Erwärmung auf 120 °C erfolgt während 5 bis 7 Minuten eine vollständige Aushärtung.

## Beispiel 4

Es wird wie im Beispiel 1 verfahren, aber folgende innere Schicht aufgebracht und die Trennschicht weggelassen.

100 Gew.-Teile Epoxidharz gemäss Beispiel 1
29 Gew.-Teile Härter auf Basis von Di-(p-aminophenyl)methan
2 Gew.-Teile Verlaufsmittel
1 Gew.-Teil Methanol
27 Gew.-Teile Bentone 27 (Montmorillonit)
11 Gew.-Teile Titandioxid
10 Gew.-Teile Mikrotalkum
34 Gew.-Teile Schwerspat

Nach 10-stündiger Härtung bei Raumtemperatur resuliert ein B-Stufenharz als feste Schicht, auf die direkt die äussere Schicht aufgebracht wird. Die Lagerstabilität ist bei RT ca. 2 Monate. Durch induktive

Erwärmung auf 120 °C erfolgt eine Aushärtung in 15 bis 20 Minuten.

Beispiel 5

a) Stahlstäbe (d = 32 mm) werden entfettet und die Oberfläche gereinigt. Dann wird mit einem Pinsel auf die Oberfläche eine innere Schicht aufgetragen, die aus einer Mischung von

a) 100 Gew.-Teilen Epoxidharz gemäss Beispiel 1
b) 8 Gew.-Teilen Dibutylphthalat und
c) 40 Gew.-Teilen Aethylendiamindibenzoat

besteht. Die Filmdicke beträgt 200-400 µm. Die nasse Schicht wird mit einem Glasseidenband umwickelt (30-50 % Ueberlappung). Anschliessend wird mit einem Pinsel die äussere Schicht aufgetragen, die aus folgender Mischung besteht:

a) 420 Gew.-Teile ungesättigtes Polyurethan (Actilane AJ 18 von SNPE)
b) 175 Gew.-Teile 1,6-Hexandioldiacrylat
c) 105 Gew.-Teile 1-Vinyl-2-pyrrolidon
d) 7 Gew.-Teile Kieselsäure (Aerosil 200, Degussa)
e) 262 Gew.-Teile Talkum
f) 31 Gew.-Teile Benzildimethylketal.

Die Dicke der äusseren Schicht beträgt 400 bis 700 µm. Die äussere Schicht wird durch Bestrahlung mit 2 UV-Ringlampen (je 2 000 W) gehärtet, wobei die beschichteten Stäbe mit einer Durchlaufgeschwindigkeit von 4,5 m/min im Abstand von 10 cm durch die Ringlampen geführt werden.

b) Es wird gemäss a) verfahren, aber vor der Härtung Quarzmehl mit einer Körnung von 0,1-0,3 mm auf die äussere Schicht gestreut.

c) Es wird gemäss a) verfahren, wobei die Schichten aus folgenden Mischungen bestehen:

Innere Schicht:

a) 100 Gew.-Teile epoxidierter Novolak, Viskosität 1 400-2 000 mPa s (50 °C), Epoxidgehalt 5,6-5,8 Val/kg
b) 12 Gew.-Teile Dibutylphthalat
c) 44 Gew.-Teile Aethylendiamindibenzoat

Aeussere Schicht:

a) 452 Gew.-Teile Acrylsäureester aus technischem Bisphenol-A-diglycidyläther mit 30 Gew.-% Tripropylenglykoldiacrylat abgemischt, Viskosität (25 °C): 60-65 Pa s.
b) 97 Gew.-Teile 1,6-Hexandioldiacrylat
c) 97 Gew.-Teile 1-Vinyl-2-pyrrolidon
d) 322 Gew.-Teile Talkum
e) 6 Gew.-Teile Kieselsäure (Aerosil 200, Degussa)
f) 26 Gew.-Teile Benzildimethylketal

d) Es wird gemäss c) verfahren, aber vor der Härtung Quarzmehl mit einer Körnung von 0,1-0,3 mm auf die äussere Schicht gestreut.

Die beschichteten Stäbe gemäss a) bis d) werden mit Beton umhüllt und der Beton ausgehärtet. Mittels einer Widerstandsheizung werden die Stäbe auf 120 °C bis 130 °C aufgeheizt und nach Erreichen dieser Temperatur wird die Stromzufuhr unterbrochen. Durch die Wärmekapazität der Stäbe wird die innere Schicht ausgehärtet. Mit diesen Prüfkörpern werden danach Zugprüfungen durchgeführt. Ein Bruch wird ausschliesslich im Beton beobachtet. Die Haftfestigkeiten der inneren Schicht auf dem Stahl, der äusseren Schicht auf der innere Schicht und der äusseren Schicht auf dem Beton ist somit höher als die Bruchfestigkeit des Betons.

**Patentansprüche**

1. Spannglied, auf das eine innere polymerbildende Schicht und eine äussere feste Kunststoffschicht aufgebracht ist, wobei die Schichten gegebenenfalls durch eine Zwischenschicht getrennt sind und die innere Schicht aus einer bei Raumtemperatur lagerstabilen, verformbaren und thermisch härtbaren

Zusammensetzung besteht, das dadurch gekennzeichnet ist, dass die äussere Schicht aus einem durch Strahlung gehärteten Kunststoff besteht.

2. Spannglied gemäss Patentanspruch 1, dadurch gekennzeichnet, dass die Zusammensetzung der inneren Schicht durch Polyaddition oder Polymerisation zu Duroplasten härtbare Ausgangsstoffe enthält.

3. Spannglied gemäss Patentanspruch 2, dadurch gekennzeichnet, dass es sich bei den Ausgangsstoffen um Epoxidharze, verkappte Polyurethane oder ungesättigte Polyester handelt.

4. Spannglied gemäss Patentanspruch 2, dadurch gekennzeichnet, dass die innere Schicht ein festes, vorreagiertes Epoxidharz ist.

5. Spannglied gemäss Patentanspruch 1, dadurch gekennzeichnet, dass die härtbare Zusammensetzung der inneren Schicht eine wärmeaktivierbaren Härter und gegebenenfalls zusätzlich einen Härtungsbeschleuniger enthält.

6. Spannglied gemäss Patentanspruch 1, dadurch gekennzeichnet, dass die härtbare Zusammensetzung ein Epoxidharz auf der Basis von Glycidyläthern von Polyphenolen enthält.

7. Spannglied gemäss Patentanspruch 1, dadurch gekennzeichnet, dass die äussere Schicht zusätzlich thermisch härtbar ist.

8. Spannglied gemäss Patentanspruch 7, dadurch gekennzeichnet, dass die äussere Schicht durch Epoxidgruppen thermisch härtbar ist.

9. Spannglied gemäss Patentanspruch 1, dadurch gekennzeichnet, dass die äussere Schicht funktionelle Gruppen enthält, die bei der thermischen Härtung der inneren Schicht mitreagieren.

10. Spannglied gemäss Patentanspruch 1, dadurch gekennzeichnet, dass die äussere Schicht ein strahlungsgehärtetes Epoxidacrylat oder Epoxidmethacrylat, Epoxidharz, Polyesteracrylat oder -methacrylat auf Bisphenolbasis, ungesättigtes Polyurethan oder Polyester oder ein Polymer mit seitenständigen Maleinimidgruppen ist.

11. Spannglied gemäss Patentanspruch 10, dadurch gekennzeichnet, dass die äussere Schicht ein strahlungsgehärtetes, zusätzlich mit mindestens einem Acrylester oder Methacrylester eines aliphatischen Polyols abgemischtes Epoxidacrylat oder Epoxidmethacrylat ist.

12. Verfahren zur Herstellung einer zweischichtigen Kunststoffumhüllung für Spannglieder, wobei die zwei Kunststoffschichten gegebenenfalls durch eine Zwischenschicht getrennt sind, indem man auf das Spannglied eine innere Schicht aus einer bei Raumtemperatur lagerstabilen, verformbaren und thermisch härtbaren Zusammensetzung aufbringt und diese gegebenenfalls mit einem Trennmaterial umhüllt, dadurch gekennzeichnet, dass man eine äussere Schicht aus einer durch Strahlung härtbaren Zusammensetzung aufbringt und danach die äussere Schicht durch Strahlung aushärtet.

13. Verwendung der Spannglieder gemäss Patentanspruch 1 zur Herstellung von vorgespannten, tragenden Konstruktionsteilen.

14. Verwendung gemäss Patentanspruch 13, worin die Konstruktionsteile Betontragewerke, wie Türme, Brücken, Decken oder Wände von Grossbehältern, oder Felsverankerungen sind.

**Claims**

1. A prestressing element onto which is applied an inner polymer-forming layer and an outer solid plastics layer, the layers being, if necessary, separated by an intermediate layer and the inner layer consisting of a moldable and thermally curable composition which is storagestable at room temperature, in which prestressing element the outer layer consists of a plastics material cured by radiation.

2. A prestressing element according to claim 1, wherein the composition of the inner layer contains starting materials curable into the form of duroplasts by means of polyaddition or polymerisation.

3. A prestressing element according to claim 2, wherein the starting materials are epoxy resins, masked polyurethanes or unsaturated polyesters.

4. A prestressing element according to claim 2, wherein the inner layer is a solid pre-reacted epoxy resin.

5. A prestressing element according to claim 1, wherein the curable composition of the inner layer contains a curing agent which can be activated by heat, and, if required, additionally a curing accelerator.

6. A prestressing element according to claim 1, wherein the curable composition contains an epoxy resin based on glycidyl ethers of polyphenols.

7. A prestressing element according to claim 1, wherein the outer layer is in addition thermally curable.

8. A prestressing element according to claim 7, wherein the outer layer is thermally curable by virtue of the presence of epoxy groups.

9. A prestressing element according to claim 1, wherein the outer layer contains functional groups which react concomitantly during the thermal curing of the inner layer.

10. A prestressing element according to claim 1, wherein the outer layer is a radiation-cured epoxyacrylate or epoxymethacrylate, epoxy resin, polyesteracrylate or polyestermethacrylate, based on bisphenol, an unsaturated polyurethane or polyester, or a polymer having maleimide side groups.

11. A prestressing element according to claim 10, wherein the outer layer is a radiation-cured epoxyacrylate or epoxymethacrylate, each of which is additionally admixed with at least one acrylic ester

or methacrylic ester of an aliphatic polyol.

12. A process for producing a two-layer plastics coating — the two plastics layers being, if necessary, separated by an intermediate layer — for prestressing elements by applying to the prestressing element an inner layer consisting of a moldable and thermally curable composition which is stable in storage at room temperature, and, if necessary, coating this layer with a separating material, which process comprises applying an outer layer of a composition curable by radiation and then curing the outer layer by radiation.

13. Use of a prestressing element according to claim 1 for producing prestressed, supporting structural members.

14. Use according to claim 13, wherein the structural members are concrete supporting structures, such as towers, bridges, ceilings, or walls of large containers, or rock bracings.

**Revendications**

1. Membre de précontrainte sur lequel a été appliquée une couche intérieure formant un polymère et une couche en matière plastique solide extérieure, les couches étant éventuellement séparées par une couche intermédiaire et la couche intérieure étant constituée d'une composition stable au stockage à la température ambiante, déformable et thermodurcissable, membre de précontrainte caractérisé en ce que la couche extérieure est constituée d'une matière plastique qui a été durcie par un rayonnement.

2. Membre de précontrainte selon la revendication 1 caractérisé en ce que la composition de la couche intérieure contient des matières de départ aptes à durcir, par polyaddition ou polymérisation, en donnant des matières thermodurcissables.

3. Membre de précontrainte selon la revendication 2 caractérisé en ce que les matières de départ sont des résines époxydiques, des polyuréthannes masqués ou des polyesters insaturés.

4. Membre de précontrainte selon la revendication 2 caractérisé en ce que la couche intérieure est en une résine époxydique solide qui a préalablement réagi.

5. Membre de précontrainte selon la revendication 1 caractérisé en ce que la composition durcissable de la couche intérieure contient un durcisseur activable par la chaleur et éventuellement un accélérateur de durcissement.

6. Membre de précontrainte selon la revendication 1 caractérisé en ce que la composition durcissable contient une résine époxydique à base d'éthers glycidyliques de polyphénols.

7. Membre de précontrainte selon la revendication 1 caractérisé en ce que la couche extérieure est en outre thermodurcissable.

8. Membre de précontrainte selon la revendication 7 caractérisé en ce que la couche extérieure est thermodurcissable par des radicaux époxy.

9. Membre de précontrainte selon la revendication 1 caractérisé en ce que la couche extérieure contient des radicaux fonctionnels qui réagissent aussi lors du thermodurcissement de la couche intérieure.

10. Membre de précontrainte selon la revendication 1 caractérisé en ce que la couche extérieure contient un acrylate ou méthacrylate d'époxyde, une résine époxydique, un polyester acrylique ou méthacrylique à base de bis-phénols, un polyuréthanne ou un polyester insaturé, durcis par un rayonnement, ou un polymère à radicaux maléimidyles latéraux.

11. Membre de précontrainte selon la revendication 10 caractérisé en ce que la couche extérieure contient un acrylate ou un méthacrylate d'époxyde en mélange avec au moins un ester acrylique ou méthacrylique d'un polyol aliphatique, durci par un rayonnement.

12. Procédé de fabrication d'un enrobage en matières plastiques à deux couches pour des membres de précontrainte, les deux couches en matières plastiques étant éventuellement séparées par une couche intermédiaire, procédé selon lequel on applique sur le membre de précontrainte une couche intérieure à partir d'une composition stable au stockage à la température ambiante, déformable et thermodurcissable et on enveloppe éventuellement cette couche avec une matière de séparation, et caractérisé en ce qu'on applique une couche extérieure à partir d'une composition durcissable par un rayonnement, puis on durcit cette couche extérieure par un rayonnement.

13. Application des membres de précontraintes selon la revendication 1 à la fabrication d'éléments de construction porteurs précontraints.

14. Application selon la revendication 13 caractérisée en ce que les éléments de construction sont des ossatures porteuses en béton, telles que des tours, des ponts, des couvertures ou des parois de grands réservoirs, ou des ancrages de roches.